# EUROPÄISCHE PATENTSCHRIFT

(11) **EP 0 838 682 B1**
(45) Veröffentlichungstag und Bekanntmachung des Hinweises auf die Patenterteilung: **16.04.2003**
(21) Anmeldenummer: 97114450.6
(22) Anmeldetag: 21.08.1997
(51) Int. Cl.: G01P 1/02

(54) **Einrichtung zur Lagefixierung eines Spulenträgers in einem topfförmig ausgebildeten Gehäuseteil**
Device for the position fixing of a coilformer in a can-like housing
Dispositif pour positionner un support de bobine dans un boîtier en forme de pot

(30) Priorität: 25.10.1996 DE 19644379
(43) Veröffentlichungstag der Anmeldung: 29.04.1998
(73) Patentinhaber: WABCO GmbH & Co. OHG, 30453 Hannover (DE)
(72) Erfinder: Singbartl, Günther, 30161 Hannover (DE)
(74) Vertreter: Schrödter, Manfred, Dipl.-Ing.

(56) Entgegenhaltungen:
- EP-A- 0 384 014
- DE-A- 4 134 279
- US-A- 2 662 996

## Beschreibung

Die Erfindung betrifft eine Einrichtung zur Lagefixierung eines Spulenträgers in einem topfförmig ausgebildeten Gehäuseteil, insbesondere für den Spulenträger eines Impulsdrehzahlgebers, gemäß dem Oberbegriff des Patentanspruchs 1.

Eine derartige Einrichtung ist aus der EP 0 384 014 B1 bekannt.

Bei der bekannten Einrichtung sind an einem Verschlußteil für das topfförmige Gehäuseteil zungenartige Anformungen angeordnet, die sich in Richtung auf den Spulenträger zu erstrecken und zu der Wand des Spulenträgers hin gerichtete nasenartige Vorsprünge aufweisen. Am Spulenträger sind den zungenartigen Anformungen zugewandte, nach Art einer Verzahnung ausgebildete Erhöhungen und Vertiefungen vorgesehen, die mit den nasenartigen Vorsprüngen der zungenartigen Anformungen des Verschlußteiles nach Art einer Rastverbindung zusammenwirken.

Mittels der Rastverbindung zwischen dem Verschlußteil und dem Spulenträger wird der Spulenträger beim Einführen von Spulenträger und Verschlußteil in das topfförmige Gehäuseteil im Sinne eines Einstellvorganges am Boden des topfförmigen Gehäuseteiles zur Anlage gebracht und mit diesem in Anlage gehalten.

Auf ihrer dem Spulenträger abgewandten Seite weisen die zungenartigen Anformungen des Verschlußteiles sich auf die Wand des topfförmigen Gehäuseteiles zu erstreckende Vorsprünge auf, mit welchen die zungenartigen Anformungen an der Wand des topfförmigen Gehäuseteiles anliegen, so daß der Spulenträger auch in radialer Richtung im topfförmigen Gehäuseteil fixiert ist.

Der Erfindung liegt die Aufgabe zugrunde, eine Einrichtung der eingangs erwähnten Art zu schaffen, bei welcher mit einfachen Mitteln eine Lagefixierung des Spulenträgers im topfförmig ausgebildeten Gehäuseteil ermöglicht wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, mittels wenigstens eines am Spulenträger angeordneten, quer zur Längsachse des Spulenträgers verlaufenden, elastisch verformbaren Elementes, welches als Federelement dient, den Spulenträger und das topfförmig ausgebildete Gehäuseteil gegeneinander verspannen zu können und somit eine sichere elastische Lagefixierung des Spulenträgers im topfförmig ausgebildeten Gehäuseteil zu erzielen, ohne am Verschlußteil oder am topfförmig ausgebildeten Gehäuseteil zusätzliche Mittel anordnen zu müssen.

Gemäß einer vorteilhaften Weiterbildung des Erfindungsgegenstandes ist dem Federelement gegenüber am Spulenträger wenigstens ein Stützkörper angeordnet, über welchen der Spulenträger sich an der Wand des topfförmig ausgebildeten Gehäuseteiles abstützt.

Vorteilhafterweise sind der Stützkörper und das als Federelement dienende elastisch verformbare Element so ausgebildet, daß sie in der Art von Distanzstücken wirken und so der Spulenträger zentrisch im topfförmig ausgebildeten Gehäuseteil elastisch fixiert ist. Vorzugsweise sind zu diesem Zweck wenigstens zwei Federelemente und zwei Stützkörper am Spulenträger angeordnet.

Gemäß einer vorteilhaften Ausgestaltung des Erfindungsgegenstandes werden das Federelement und der Stützkörper von Vorsprüngen des Spulenträgers gebildet, wobei die elastische Verformbarkeit des Federelementes dadurch erreicht wird, daß in dem einen Vorsprung eine im wesentlichen in Richtung der Längsachse des Spulenträgers verlaufende Durchbrechung oder auch Ausnehmung angeordnet wird. Die Durchbrechung oder die Ausnehmung ist so im Vorsprung angeordnet, daß der Bereich der die Durchbrechung bzw. die Ausnehmung begrenzenden Wand, welcher Kontakt mit der Wand des topfförmig ausgebildeten Gehäuseteiles hat, schwächer ausgebildet ist als der Bereich, der die Durchbrechung bzw. die Ausnehmung begrenzenden Wand, der wenigstens zum Teil von dem Spulenträger gebildet wird.

Gemäß einer vorteilhaften Weiterbildung des Erfindungsgegenstandes ist an der dem Verschlußteil zugewandten Seite des Spulenträgers oder an der dem Spulenträger zugewandten Seite des Verschlußteiles ein weiteres als Federelement dienendes elastisch verformbares Element angeordnet, welches den Spulenträger in Richtung auf den Boden des topfförmig ausgebildeten Gehäuseteiles zu beaufschlagt. Durch die Anordnung dieses weiteren Federelementes wird eine zusätzliche elastische Fixierung des Spulenträgers in Richtung seiner Längsachse bewirkt.

Anhand der Zeichnung wird nachstehend ein Ausführungsbeispiel der Erfindung näher erläutert.

Es zeigen:
- Fig. 1: einen Längsschnitt durch den erfindungsgemäßen Impulsdrehzahlgeber und
- Fig. 2: eine Ansicht des Impulsdrehzahlgebers gemäß der Schnittlinie A-A.

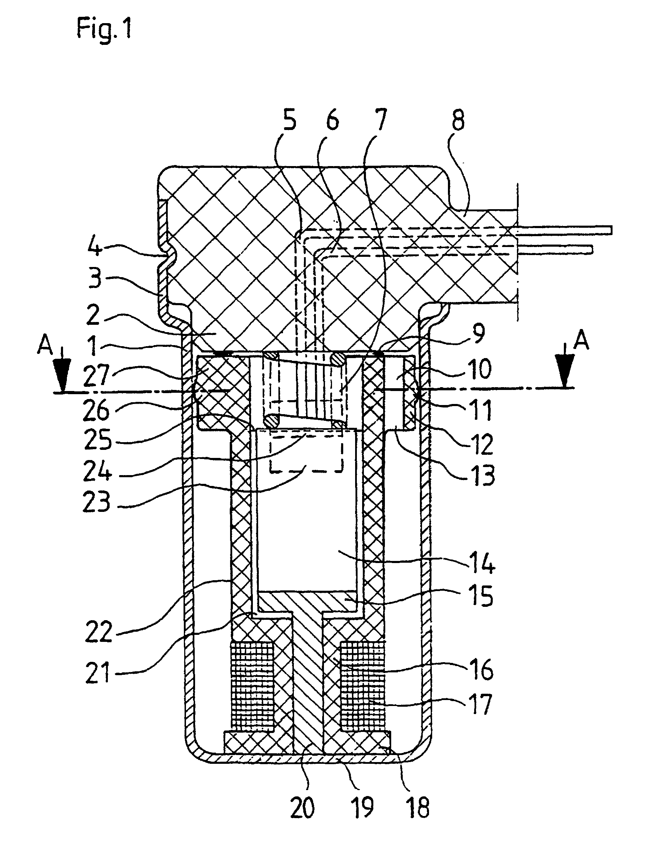

Der in Fig. 1 dargestellte Impulsdrehzahlgeber weist ein Gehäuse (1, 19, 3, 2, 8) auf, welches sich aus einem topfförmig ausgebildeten Gehäuseteil (1, 3, 19) und einem Verschlußteil (2, 8) für das topfförmig ausgebildete Gehäuseteil (1, 3, 19) zusammensetzt. Das topfförmig ausgebilete Gehäuseteil (1, 3, 19) besitzt einen Boden (19) und weist auf seiner dem Boden (19) gegenüberliegenden Seite einen erweiterten Bereich (3) auf, der zur Aufnahme des Verschlußteils (2, 8) dient.

Im topfförmig ausgebildeten Gehäuseteil (1, 3, 19) ist ein rohrförmig ausgebildeter, abgestufter Spulenträger (22, 16, 18) angeordnet. Der Spulenträger (22, 16, 18) ist an seinem dem Boden (19) des topfförmig ausgebildeten Gehäuseteiles (1, 3, 19) zugewandten Ende mit einem sich radial nach außen erstreckenden umlaufenden Vorsprung (18) versehen. Zwischen der Abstufung und dem umlaufenden Vorsprung (18) ist auf dem den geringeren Querschnitt aufweisenden Teil (16) des Spulenträgers (22, 16, 18) eine diesen Teil (16) des Spulenträgers (22, 16, 18) umgebende Spulenwicklung (17) angeordnet.

In dem rohrförmigen Spulenträger (22, 16, 18) sind ein rotationssymmetrisch ausgebildeter, abgestufter Polstift (15, 20) und ein ebenfalls rotationssymmetrisch ausgebildeter Permanentmagnet (14) derart angeordnet, daß der Polstift (15, 20) mit seiner den geringeren Querschnitt aufweisenden Stirnseite am Boden (19) des topfförmig ausgebildeten Gehäuseteils (1, 3, 19) anliegt. Der Permanentmagnet (14) ist auf der dem Boden (19) abgewandten Seite des Polstiftes (15, 20) gelegen und mit diesem in engem Kontakt.

Auf dem Umfang des Spulenträgers (22, 16, 18) sind an dessen dem Boden (19) des topfförmig ausgebildeten Gehäuseteiles (1, 3, 19) abgewandten Endbereich vier von Anformungen des Spulenträgers (22, 16, 18) gebildete Vorsprünge (13, 27, 28, 35) angeordnet, die quer zur Längsachse des Spulenträgers (22, 16, 18) verlaufen und sich in Richtung auf die Wand des topfförmig ausgebildeten Gehäuseteiles (1, 3, 19) zu erstrecken. In Fig. 1 sind lediglich zwei Vorsprünge (13 und 27) dargestellt. Jeweils zwei Vorsprünge (13 und 27) bzw. Vorsprünge (28 und 35) sind diagonal einander gegenüberliegend angeordnet. Die auf der einen Hälfte des Umfangs des Spulenträgers (22, 16, 18) angeordneten Vorsprünge (13 und 28) weisen in Richtung der Längsachse des Spulenträgers (22, 16, 18) verlaufende Durchbrechungen (10 und 31) auf, wobei die Durchbrechungen (10 und 31) als längliche Schlitze ausgebildet und so in den Vorsprüngen (13 und 28) angeordnet sind, daß die Bereiche der die Durchbrechungen (10 und 31) begrenzenden Wände der Vorsprünge (13 und 28), die der Wand des topfförmig ausgebildeten Gehäuseteiles (1, 3, 19) direkt gegenüberliegen, einen geringeren Querschnitt aufweisen, als die Bereiche der die Durchbrechungen (10 und 31) begrenzenden Wände, welche zum Teil vom Spulenträger (22, 16, 18) gebildet werden. Auf diese Art und Weise werden als Federelemente (12, 11 und 29, 30) dienende elastisch verformbare Elemente gebildet. Die auf der anderen Hälfte des Umfangs des Spulenträgers (22, 16, 18) angeordneten Vorsprünge (27 und 35) dienen als Stützkörper (27, 26) bzw. Stützkörper (35, 36). Die als Federelemente (12 und 29) ausgebildeten Vorsprünge (13 und 28) und die als Stützkörper (27, 26) bzw. Stützkörper (35, 36) dienenden Vorsprünge (27 und 35) besitzen je eine noppenartige Erhöhung (11 bzw. 30 bzw. 26 bzw. 36), die sich zur Wand des topfförmig ausgebildeten Gehäuseteiles (1, 3, 19) hin erstrecken. Die noppenartigen Erhöhungen (11, 30, 26, 36) ermöglichen es, den Anlagebereich des Spulenträgers (22, 16, 18) an der Wand des topfförmig ausgebildeten Gehäuseteiles (1, 3, 19) genau zu definieren.

Wenn der Spulenträger (22, 16, 18) in das topfförmig ausgebildete Gehäuseteil (1, 3, 19) eingesetzt ist, liegt er mit seiner dem Boden (19) des topfförmig ausgebildeten Gehäuseteiles (1, 3, 19) zugewandten Seite am Boden (19) an und stützt sich radial über die Stützkörper (27, 26 und 35, 36) sowie die Federelemente (12, 11 und 29, 30) an der Wand des topfförmig ausgebildeten Gehäuseteils (1, 3 19) ab. Dabei hat der Spulenträger (22, 16, 18) radial über die noppenartigen Erhöhungen (11, 30, 26, 36) nur punktförmige Berührung mit der Wand des topfförmig ausgebildeten Gehäuseteiles (1, 3, 19). Die Stützkörper (27, 26 und 35, 36) sowie die Vorsprünge (13 und 28) mit den Federelementen (12, 11 und 29, 30) sind in ihrer Erstreckung quer zur Längsachse des Spulenträgers (22, 16, 18) so bemessen, daß der Spulenträger (22, 16, 18) im topfförmig ausgebildeten Gehäuseteil (1, 3, 19) zentrisch fixiert ist.

In den erweiterten Bereich (3) des topfförmig ausgebildeten Gehäuseteiles (1, 3, 19) ist das Verschlußteil (2, 8) für das topfförmig ausgebildete Gehäuseteil (1, 3, 19) eingesetzt. Das Verschlußteil (2, 8) weist auf seiner dem Spulenträger (22, 16, 18) zugewandten Seite einander gegenüberliegend zwei zungenartige Anformungen (23 und 33) auf, die sich in Richtung auf den Spulenträger (22, 16, 18) zu erstrecken und im wesentlichen parallel zur Längsachse des Spulenträgers (22, 16, 18) verlaufen. Die zungenartigen Anformungen (23 und 33) des Verschlußteiles (2, 8) sind so angeordnet, daß sie zwischen der Innenwand des topfförmig ausgebildeten Gehäuseteiles (1, 3, 19) und dem Spulenträger (22, 16, 18) gelegen sind. In Fig. 1 ist nur eine zungenartige Anformung (23) gestrichelt dargestellt.

Jede der beiden zungenartigen Anformungen (23 bzw. 33) weist wenigstens einen nasenartigen Vorsprung (24 bzw. 34) auf, der sich in Richtung auf die Mantelfläche des Spulenträgers (22, 16, 18) zu erstreckt.

Auf seinem Umfang weist der Spulenträger (22, 16, 18), jeweils zwischen einem Stützkörper (27, 26 bzw. 35, 36) und einem ein Federelement (12, 11 bzw. 29, 30) aufweisenden Vorsprung (13 bzw. 28) gelegen, im Bereich der zungenartigen Anformungen (23 und 33) des Verschlußteiles (2, 8) wenigstens eine Erhöhung (25 bzw. 32) auf. Die nasenartigen Vorsprünge (24 und 34) der zungenartigen Anformungen (23 und 33) des Verschlußteiles (2, 8) übergreifen die Erhöhungen (25 und 32) des Spulenträgers (22, 16, 18).

Zwischen den einander zugewandten Seiten von Spulenträger (22, 16, 18) und Verschlußteil (2, 8) ist wenigstens ein als ein weiteres Federelement (9) dienendes elastisch verformbares Element angeordnet. Das weitere Federelement (9) ist als ein ringförmier Körper ausgebildet, der sich mit seinem einen Ende am Verschlußteil (2, 8) abstützt und mit seinem anderen Ende den Spulenträger (22, 16, 18) in Richtung auf den Boden (19) des topfförmig ausgebildeten Gehäuseteils (1, 3, 19) zu belastet und so den Spulenträger (22, 16, 18) mit seiner dem Boden (19) zugewandten Seite mit dem Boden (19) in Anlage hält.

Das Verschlußteil (2, 8) weist eine Führung (8) für ein Kabel bzw. für Adern (5 und 6) eines Kabels auf, mittels welcher die Spule (14) mit einem außerhalb des Gehäuses (1, 3, 19, 2, 8) des Impulsdrehzahlgebers gelegenen elektrischen Bauteil verbindbar ist.

Die zungenartigen Anformungen (23 und 33) können selbstverständlich auch am Spulenträger (22, 16, 18) angeordnet sein, derart, daß sie sich in Richtung auf das Verschlußteil (2, 8) zu erstrecken. Bei einer solchen Ausführungsform müßte das Verschlußteil (2, 8) einen sich in Richtung auf den Spulenträger (22, 16, 18) zu erstreckenden Fortsatz besitzen, dessen Querschnitt so bemessen sein müßte, daß die zungenartigen Anformungen (23 und 33) außen am Fortsatz vorbei geführt werden können.

Das topfförmig ausgebildete Gehäuseteil (1, 3, 19) und das Verschlußteil (2, 8) sind durch Eindrücken (Sicke 4) bestimmter Stellen der Wand des topfförmig ausgebildeten Gehäuseteils (1, 3, 19) in entsprechende Ausnehmungen in der Mantelfläche des Verschlußteiles (2, 8) miteinander verbunden. Selbstverständlich können zur Verbindung dieser beiden Bauteile auch andere geeignete Mittel dienen.

Zwischen dem Verschlußteil (2, 8) und dem Permanentmagneten (14) ist eine Feder (7) angeordnet, die sich mit ihrem einen Ende am Verschlußteil (2, 8) abstützt und mit ihrem anderen Ende den Permanentmagneten (14) in Richtung auf den Boden (19) des topfförmig ausgebildeten Gehäuseteiles (1, 3, 19) zu beaufschlagt. Da der Permanentmagnet (14) und der Polstift (15, 20) in Reihe hintereinander angeordnet sind, wird der Polstift (15, 20) mit seiner dem Permanentmagneten (14) abgewandten Seite durch die Kraft der Feder (7) mit dem Boden (19) des topfförmig ausgebildeten Gehäuseteiles (1, 3, 19) in Anlage gehalten.

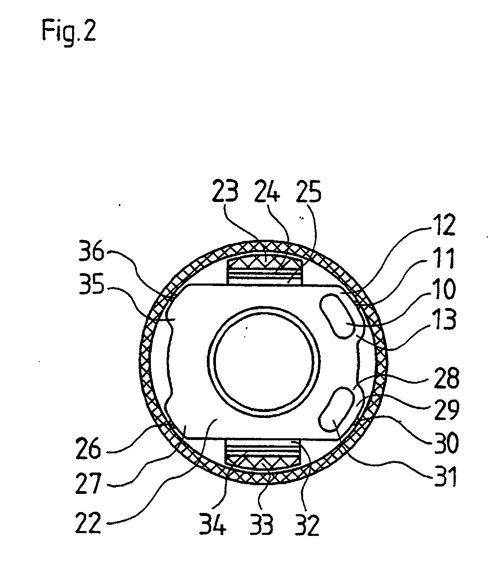

In Fig. 2 ist eine Ansicht des in Fig. 1 gezeigten Impulsdrehzahlgebers gemäß der Schnittlinie A-A dargestellt.

In dieser Ansicht ist deutlich die paarweise Anordnung der die Federelemente (12, 11 und 29, 30) aufweisenden Vorsprünge (13 und 28) auf der einen Hälfte des Umfangs des Spulenträgers (22, 16, 18) und die paarweise Anordnung der als Stützkörper (35, 36 und 27, 26) ausgebildeten Vorsprünge (35 und 27) auf der anderen Hälfte des Umfangs des Spulenträgers (22, 16, 18) sowie die diagonale Anordnung von je einem Federelement (12, 11 bzw. 29, 30) und einem Stützkörper (27, 26) bzw. (35, 36) erkennbar. Ebenso ist aus Fig. 2 ersichtlich, daß die Erhöhungen (25 und 32) des Spulenträgers (22, 16, 18), die mit den nasenartigen Vorsprüngen (24 und 34) der zungenartigen Anformungen (23 und 33) des Verschlußteiles (2, 8) eine Schnappverbindung zwischen Verschlußteil (2, 8) und Spulenträger (22, 16, 18) bilden, einander gegenüberliegend jeweils zwischen einem Stützkörper (27, 26 bzw. 35, 36) und einem ein Federelement (29, 30 bzw. 12, 11) tragenden Vorsprung (28 bzw. 13) am Spulenträger (22, 16, 18) angeordnet sind.

Die zur Schnappverbindung dienenden Erhöhungen und Vertiefungen können an Anformungen des Spulenträgers (22, 16, 18) und des Verschlußteiles (2, 8) oder auch direkt an diesen genannten Bauteilen vorgesehen werden.

Die als Federelemente (12, 11 und 29, 30) dienenden elastisch verformbaren Elemente können als mit den Vorsprüngen (13 und 28) oder direkt mit dem Spulenträger (22, 16, 18) lösbar verbundene elastisch verformbare Elemente ausgebildet sein. Die Stützkörper (35, 36 bzw. 27, 26) müssen nicht von Vorsprüngen des Spulenträgers (22, 16, 18) gebildet werden, sondern können auch von separaten Bauelementen gebildet werden, die z.B. durch Anspritzen, Kleben oder Schrauben mit dem Spulenträger (22, 16, 18) verbunden werden.

Die Federelemente können z.B. auch von Blattfedern oder andersartig ausgebildeten Federn, die in Richtung der Längsachse oder in Richtung quer zur Längsachse des Spulenträgers (22, 16, 18) an diesem angeordnet sind, gebildet werden.

Bei entsprechender Dimensionierung des als Federelement dienenden elastisch verformbaren Elementes und des Stützkörpers - größere Länge in Richtung quer zur Längsachse des Spulenträgers - ist es möglich, am Spulenträger (22, 16, 18) nur ein Federelement und nur einen Stützkörper anzuordnen. Um eine gute zentrische elastische Fixierung des Spulenträgers (22, 16, 18) im Gehäuse (1, 3, 19, 2, 8) zu erzielen ist es jedoch von Vorteil, mindestens ein Federelement und mindestens zwei Stützkörper oder mindestens zwei Federelemente und mindestens einen Stützkörper am Spulenträger (22, 16, 18) anzuordnen. Die Anordnung von noppenartigen Erhöhungen (11, 30, 26, 36) an den Federelementen (12 und 29) und den Stützkörpern (27 und 35) ist zwar vorteilhaft, aber nicht unbedingt erforderlich.

Eine bevorzugte Art der Montage des vorstehend beschriebenen Impulsdrehzahlgebers wird nachfolgend näher erläutert.

Vor dem Einbringen des Spulenträgers (22, 16, 18) in das topfförmig ausgebildete Gehäuseteil (1, 3, 19) wird das Kabel mit den Adern (5, 6) in die Führung (8) des Verschlußteiles (2, 8) eingebracht. Der Polstift (15, 20) und der Permanentmagnet (14) werden nacheinander in den abgestuft ausgebildeten Innenraum (21) des rohrförmigen Spulenträgers (22, 16, 18) eingesetzt. Anschließend wird die Feder (7) in den freien Raum des Spulenträgers (22, 16, 18) eingesetzt. Das Verschlußteil (2, 8) wird dann mit seinen zungenartigen Anformungen (23 und 33) auf den die Erhöhungen (25 und 32) aufweisenden Teil des Spulenträgers (22, 16, 18) aufgeschoben, und zwar so weit, bis die zungenartigen Anformungen (23 und 33) des Verschlußteiles (2, 8) mit ihren nasenartigen Vorsprüngen (24 und 34) über die Erhöhungen (25 und 32) des Spulenträgers (22, 16, 18) greifen, so daß der Spulenträger (22, 16, 18) dann mit dem Verschlußteil (2, 8) nach Art einer Schnappverbindung verbunden ist.

Erleichtert wird der Vorgang des Zusammenfügens von Verschlußteil (2, 8) und Spulenträger (22, 16, 18) dadurch, daß an den Erhöhungen (25 und 32) des Spulenträgers (22, 16,18) Anlaufschrägen vorgesehen sind, mittels welchen die zungenartigen Anformungen (23 und 33) des Verschlußteiles (2, 8) beim Zusammensteckvorgang von Verschlußteil (2, 8) und Spulenträger (22, 16, 18) nacn außen gespreizt (elastisch verformt) werden.

Das Verschlußteil (2, 8) und der Spulenträger (22, 16, 18) werden jetzt von der zwischen diesen beiden Bauteilen angeordneten Feder (7), die einerseits am Verschlußteil (2, 8) und andererseits am Permanentmagneten (14) anliegt, in der Weise belastet, daß sie bestrebt sind, sich voneinander wegzubewegen.

Durch die von den Erhöhungen (25 und 32) des Spulenträgers (22, 16, 18) und den Vorsprüngen (24 und 34) der zungenartigen Anformungen (23 und 33) des Verschlußteiles (2, 8) gebildete Schnappverbindung sowie durch die Feder (7) werden der Spulenträger (22, 16, 18) und das Verschlußteil (2, 8) unter Vorspannung zusammengehalten und bilden so eine Baueinheit.

Die so vormontierte Baueinheit (Verschlußteil 2, 8 und Spulenträger 22, 16, 18) wird dann in das topfförmig ausgebildete Gehäuseteil (1, 3, 19) eingeführt. Sobald die Stützkörper (27, 26, 35, 36) und die Federelemente (12, 11, 29, 30) mit ihren noppenartigen Erhöhungen (11, 30, 26, 36) den schräg verlaufenden Übergang von dem den größeren Durchmesser aufweisenden Bereich (3) zu dem den kleineren Durchmesser aufweisenden Bereich (1) des topfförmig ausgebildeten Gehäuseteiles (1, 3, 19) erreicht haben, wird bei der weiteren Bewegung des Spulenträgers (22, 16, 18) in Richtung auf den Boden (19) des topfförmig ausgebildeten Gehäuseteiles (1, 3, 19) zu jedes der beiden Federelemente (12, 11 bzw. 29, 30) in Richtung auf die Durchbrechung (10 bzw. 31) des betreffenden Vorsprungs (13 bzw. 28) zu elastisch verformt. Die so erzeugte Vorspannung der Federelemente (12, 11 und 29, 30) bewirkt, daß der Spulenträger (22, 16, 18) dann über seine Stützkörper (27, 26 und 35, 36) und über die Federelemente (12, 11 und 29, 30) mit der Wand des topfförmig ausgebildeten Gehäuseteiles (1, 3, 19) verspannt ist.

Der Spulenträger (22, 16, 18) wird so weit in das topfförmig ausgebildete Gehäuseteil (1, 3, 19) eingeschoben, bis er an dessen Boden (19) zur Anlage kommt. Das zwischen dem Verschlußteil (2, 8) und dem Spulenträger (22, 16, 18) angeordnete weitere Federelement (9) ist so bemessen, daß es vorgespannt ist, wenn der Spulenträger (22, 16, 18) und das Verschlußteil (2, 8) ihre endgültige Position erreicht haben.

Es ist auch möglich, in einem ersten Montageschritt den Spulenträger (22, 16, 18) in das topfförmig ausgebildete Gehäuseteil (1, 3, 19) einzusetzen und in einem zweiten Montageschritt das Verschlußteil (2, 8) aufzusetzen. Dabei rastet die Schnappverbindung -Erhöhungen/Vertiefungen (32, 25) des Spulenträgers (22, 16, 18), Vorsprünge (24, 34) der zungenartigen Anformungen (23, 33) des Verschlußteiles (2, 8)- ein. Bei der weiteren Bewegung des Verschlußteiles (2, 8) in der gleichen Richtung wird der Spulenträger (22, 16, 18) in seine fixierte Lage gebracht.

Das topfförmig ausgebildete Gehäuseteil (1, 3, 19) und das Verschlußteil (2, 8) werden dann, wie vorstehend bereits beschrieben, miteinander verbunden -Eindrücken von bestimmten Bereichen der Gehäusewand in Vertiefungen des Verschlußteiles (2, 8)-.

Mit den vorstehend beschriebenen Mitteln wird erreicht, daß der Spulenträger (22, 16, 18) sowohl in Richtung seiner Längsachse als auch quer zu seiner Längsachse im Gehäuse (1, 3, 19, 2, 8) elastisch fixiert ist.

Das zwischen dem Verschlußteil (2, 8) und dem Spulenträger (22, 16, 18) angeordnete weitere Federelement (9) kann z. B. von einem am Spulenträger (22, 16, 18) oder am Verschlußteil (2, 8) angeorndeten elastisch verformbaren Element gebildet werden.

Das weitere Federelement (9) kann aus einem Gelkissen, welches ringförmig ausgebildet ist, bestehen. Vorteilhafterweise können aber auch mehrere als weitere Federelemente dienende elastisch verformbare Elemente vorgesehen werden, die von mit Durchbrechungen versehenen Vorsprüngen des Verschlußteiles (2, 8) oder des Spulenträgers (22, 16, 18) gebildet werden. Diese eine Durchbrechung oder eine Ausnehmung aufweisenden Vorsprünge sind dann an der dem Verschlußteil (2, 8) zugewandten Stirnseite des Spulenträgers (22, 16, 18) oder an der dem Spulenträger (22, 16, 18) zugewandten Stirnseite des Verschlußteiles (2, 8) angeordnet und so bemessen, daß sie nach dem Zusammenfügen von topfförmig ausgebildetem Gehäuseteil (1, 3, 19) und Verschlußteil (2, 8) unter Vorspannung den Spulenträger (22, 16, 18) am Boden (19) des topfförmig ausgebildeten Gehäuseteiles (1, 3, 19) halten.

Die Aussage, daß der Spulenträger mittels des weiteren Federelementes vom Verschlußteil mit Vorspannung in Richtung auf den Boden des topfförmigen Gehäuseteiles zu beaufschlagt wird, bedeutet, daß der Spulenträger mit einer Federkraft belastet in Anlage mit dem Boden des topfförmig ausgebildeten Gehäuseteiles gehalten wird.

Die Federkräfte der den Spulenträger in radialer Richtung im Gehäuse (1, 3, 19, 2, 8) elastisch fixierenden Federelemente und die Federkraft des den Spulenträger zusätzlich in axialer Richtung im Gehäuse (1, 3, 19, 2, 8) elastisch fixierenden weiteren Federelementes sind so bemessen, daß sie von auftretenden Beschleunigungen und daraus resultierenden Massenkräften nicht aufgehoben werden, und daß sie eine Eigenfrequenz aufweisen, die außerhalb der im Einsatz auftretenden liegt. Je nach Auslegung der in radialer Richtung wirkenden Federelemente (12, 11, 29, 30) ist durch diese auch schon eine begrenzte Fixierung des Spulenträgers (22, 16, 18) im Gehäuse (1, 3, 19, 2, 8) in Richtung seiner Längsachse gegeben.

Es ist gemäß der Erfindung auch möglich das Federelement zum Fixieren des Spulenträgers in radialer Richtung als eine den Spulenträger umgebende Ringscheibe auszubilden, die in Richtung der Längsachse des Spulenträgers geschlitzt und mit einer stützenden und federnden Kontur asugebildet sein kann.

Anstelle der beschriebenen zungenartigen Anformungen, nasenartigen Vorsprünge sowie Erhöhungen und Vertiefungen können am Verschlußteil und am Spulenträger auch anders ausgebildete Mittel zur kraft- und/oder formschlüssigen Verbindung des Spulenträgers mit dem Verschlußteil angeordnet werden.

Im montierten Zustand liegt der Spulenträger mit seiner dem Verschlußteil abgewandten Seite direkt am Boden des topfförmig ausgebildeten Gehäuseteiles oder an einem am Boden oder in der Nähe des Bodens angeordneten Teil an.

## Patentansprüche

1. Einrichtung zur Lagefixierung eines Spulenträgers (22, 16, 18) in einem topfförmig ausgebildeten Gehäuseteil (1, 3, 19), insbesondere für den Spulenträger (22, 16, 18) eines Impulsdrehzahlgebers, welches ein Verschlußteil (2, 8) aufweist, das auf der dem Boden (19) des topfförmig ausgebildeten Gehäuseteiles (1, 3, 19) abgewandten Seite des Spulenträgers (22, 16, 18) im bzw. am topfförmig ausgebildeten Gehäuseteil (1, 3, 19) angeordnet ist, **dadurch gekennzeichnet, daß** auf dem Umfang des Spulenträgers (22, 16, 18) wenigstens ein Federelement (12, 29) angeordnet ist, welches quer zur Längsachse des Spulenträgers (22, 16, 18) verlaufend sich vom Spulenträger (22, 16, 18) weg, in Richtung auf die Wand des topfförmig ausgebildeten Gehäuseteiles (1, 3, 19) zu erstreckt, wobei das Federelement (12, 29) so ausgebildet und so bemessen ist, daß es unter Vorspannung an der Wand des topfförmig ausgebildeten Gehäuseteiles (1, 3, 19) anliegt und den Spulenträger (22, 16, 18) im topfförmig ausgebildeten Gehäuseteil (1, 3, 19) elastisch fixiert.

2. Einrichtung nach Anspruch 1, **dadurch gekennzeichnet, daß** zusätzlich zu dem Federelement (12, 29) am Spulenträger (22, 16, 18) wenigstens ein quer zur Längsachse des Spulenträgers (22, 16, 18) verlaufender, sich von diesem weg, in Richtung auf die Wand des topfförmig ausgebildeten Gehäuseteiles zu erstreckender Stützkörper (27, 26, 35, 36) angeordnet ist, der so ausgebildet und so bemessen ist, daß der Spulenträger (22, 16, 18) sich über den Stützkörper (27, 26, 35, 36) an der Wand des topfförmig ausgebildeten Gehäuseteiles (1, 3, 19) abstützt, wobei der Stützkörper (27, 26, 35, 36) und das Federelement (12, 29) so zueinander am Spulenträger (22, 16, 18) angeordnet sind, daß der Spulenträger (22, 16, 18) vom Federelement (12, 29) in Richtung auf den Stützkörper (27, 26, 35, 36) zu belastet wird.

3. Einrichtung nach wenigstens einem der vorhergehenden Ansprüche, **dadurch gekennzeichnet, daß** das Federelement (12, 29) einstückig mit dem Spulenträger (22, 16, 18) ausgebildet ist.

4. Einrichtung nach wenigstens einem der vorhergehenden Ansprüche, **dadurch gekennzeichnet, daß** der Stützkörper (27, 26, 35, 36) einstückig mit dem Spulenträger (22, 16, 18) ausgebildet ist.

5. Einrichtung nach wenigstens einem der vorhergehenden Ansprüche, **dadurch gekennzeichnet, daß** das Federelement (12, 29) als eine den Spulenträger (22, 16, 18) umgebende Ringscheibe ausgebildet ist.

6. Einrichtung nach Anspruch 5, **dadurch gekennzeichnet, daß** die Ringscheibe eine stützende und federnde Kontur aufweist.

7. Einrichtung nach wenigstens einem der vorhergehenden Ansprüche, **dadurch gekennzeichnet, daß** zwischen den einander zugewandten Seiten von Verschlußteil (2, 8) und Spulenträger (22, 16, 18) wenigstens ein weiteres Federelement (9) angeordnet ist, mittels welchem der Spulenträger (22, 16, 18) mit seiner dem Verschlußteil (2, 8) abgewandten Seite am Boden (19) des topfförmig ausgebildeten Gehäuseteiles (1, 3, 19) oder an einem mit dem Boden (19) des topfförmig ausgebildeten Gehäuseteiles (1, 3, 19) verbundenen Teil in Anlage gehalten und in Richtung seiner Längsachse im Gehäuse (1, 3, 19, 2, 8) elastisch fixiert wird.

8. Einrichtung nach Anspruch 7, **dadurch gekennzeichnet, daß** das weitere Federelement (9) einstückig mit dem Spulenträger (22, 16, 18) ausgebildet ist.

9. Einrichtung nach Anspruch 7, **dadurch gekennzeichnet, daß** das weitere Federelement (9) einstückig mit dem Verschlußteil (2, 8) ausgebildet ist.

10. Einrichtung nach wenigstens einem der vorhergehenden Ansprüche, **dadurch gekennzeichnet, daß** das weitere Federelement (9) von einem Vorsprung des Spulenträgers (22, 16, 18) oder einem Vorsprung des Verschlußteiles (2, 8) gebildet wird, wobei der Vorsprung sich in Richtung auf das Verschlußteil (2, 8) oder in Richtung auf den Spulenträger (22, 16, 18) zu erstreckt und eine Durchbrechung oder eine Ausnehmung aufweist.

11. Einrichtung nach Anspruch 10, **dadurch gekennzeichnet, daß** am Spulenträger (22, 16, 18) oder am Verschlußteil (2, 8) mehrere als weitere Federelemente dienende Vorsprünge angeordnet sind.

12. Einrichtung nach Anspruch 1, **dadurch gekennzeichnet, daß** am Verschlußteil (2, 8) oder/und am Spulenträger (22, 16, 18) Mittel zur kraft- oder/und formschlüssigen Verbindung des Verschlußteiles (2, 8) mit dem Spulenträger (22, 16, 18) vorgesehen sind.

13. Einrichtung nach Anspruch 12, **dadurch gekennzeichnet, daß** die Mittel von wenigstens einer Erhöhung (24, 34) und/oder Vertiefung am Verschlußteil (2, 8) oder einem mit dem Verschlußteil (2, 8) verbundenen Teil und von wenigstens einer am Spulenträger (22, 16, 18) oder an einem mit Spulenträger (22, 16, 18) verbundenen Teil vorgesehenen Vertiefung oder/und Erhöhung (25, 32) gebildet werden, die nach Art einer Schnappverbindung zusammenwirken.

14. Einrichtung nach wenigstens einem der vorhergehenden Ansprüche, **gekennzeichnet durch** die folgenden Merkmale:
a) das Verschlußteil (2, 8) weist auf seiner dem Spulenträger (22, 16, 18) zugewandten Seite sich auf den Spulenträger (22, 16, 18) zu erstrekkende, im wesentlichen parallel zur Längsachse des topfförmig ausgebildeten Gehäuseteiles (1, 3, 19) verlaufende, zungenartige Anformungen (23 und 33) auf;
b) jede der Anformungen (23 bzw. 33) weist wenigstens einen quer zu seiner Längsachse verlaufenden, sich in Richtung auf den Spulenträger (22, 16, 18) zu erstreckenden Vorsprung (24 bzw. 34) auf;
c) am Spulenträger (22, 16, 18) sind im wesentlichen quer zur Längsachse des Spulenträger (22, 16, 18) verlaufende Erhöhungen (25 bzw. 32) und/oder Vertiefungen vorgesehen, welche mit den Vorsprüngen (24 bzw. 34) der zungenartigen Anformungen (23 bzw. 33) des Verschlußteiles (2, 8) nach Art einer Schnappverbindung zusammenwirken.

## Claims

1. Arrangement for fixing in position a coil carrier (22, 16, 18) in a can-like housing part (1, 3, 19), especially for the coil carrier (22, 16, 18) of a pulse-type speed sensor, which housing part comprises a cover part (2, 8), which, on the side of the coil carrier (22, 16, 18) remote from the base (19) of the can-like housing part (1, 3, 19), is arranged in or on the can-like housing part (1, 3, 19), **characterised in that** on the circumference of the coil carrier (22, 16, 18) there is arranged at least one spring element (12, 29) that extends, running transversely to the longitudinal axis of the coil carrier (22, 16, 18), away from the coil carrier (22, 16, 18) towards the wall of the can-like housing part (1, 3, 19), the spring element (12, 29) being so constructed and so dimensioned that it lies under bias against the wall of the can-like housing part (1, 3, 19) and resiliently fixes the coil carrier (22, 16, 18) in the can-like housing part (1, 3, 19).

2. Arrangement according to claim 1, **characterised in that**, in addition to the spring element (12, 29), at least one supporting member (27, 26, 35, 36) running transversely to the longitudinal axis of the coil carrier (22, 16, 18) and extending away therefrom towards the wall of the can-like housing part (1, 3, 19) is arranged on the coil carrier (22, 16, 18), the supporting member being so constructed and so dimensioned that the coil carrier (22, 16, 18) is supported via the supporting member (27, 26, 35, 36) against the wall of the can-like housing part (1, 3, 19), the supporting member (27, 26, 35, 36) and the spring element (12, 29) being so arranged relative to one another on the coil carrier (22, 16, 18) that the coil carrier (22, 16, 18) is loaded by the spring element (12, 29) towards the supporting member (27, 26 , 35, 36).

3. Arrangement according to at least one of the preceding claims,
**characterised in that** the spring element (12, 29) is formed integrally with the coil carrier (22, 16, 18).

4. Arrangement according to at least one of the preceding claims,
**characterised in that** the supporting member (27, 26, 35, 36) is formed integrally with the coil carrier (22, 16, 18).

5. Arrangement according to at least one of the preceding claims,
**characterised in that** the spring element (12, 29) is in the form of an annular washer surrounding the coil carrier (22, 16, 18).

6. Arrangement according to claim 5, **characterised in that** the annular washer has a contour providing support and resilience.

7. Arrangement according to at least one of the preceding claims,
**characterised in that** between the sides facing one another of cover part (2, 8) and coil carrier (22, 16, 18) at least one further spring element (9) is arranged, by means of which the coil carrier (22, 16, 18) is held with its end remote from the cover part (2, 8) in contact with the base (19) of the can-like housing part (1, 3, 19) or in contact with a part connected to the base (19) of the can-like housing part (1, 3, 19) and is resiliently fixed in the direction of its longitudinal axis in the housing (1, 3, 19, 2, 8).

8. Arrangement according to claim 7, **characterised in that** the further spring element (9) is formed integrally with the coil carrier (22, 16, 18).

9. Arrangement according to claim 7, **characterised in that** the further spring element (9) is formed integrally with the cover part (2, 8).

10. Arrangement according to at least one of the preceding claims,
**characterised in that** the further spring element (9) is formed by a projection of the coil carrier (22, 16, 18) or a projection of the cover part (2, 8), the projection extending towards the cover part (2, 8) or towards the coil carrier (22, 16, 18) and having an opening or an aperture.

11. Arrangement according to claim 10, **characterised in that** a plurality of projections serving as further spring elements are arranged on the coil carrier (22, 16, 18) or on the cover part (2, 8).

12. Arrangement according to claim 1, **characterised in that** means for non-positive or/and positive connection of the cover part (2, 8) with the coil carrier (22, 16, 18) are provided on the cover part (2, 8) or/and on the coil carrier (22, 16, 18).

13. Arrangement according to claim 12, **characterised in that** the means, which co-operate in the manner of a snap-fit connection, are formed by at least one raised area (23, 34) and/or depression on the cover part (2, 8) or a part connected to the cover part (2, 8) and by at least one depression or/and raised area (25, 32) provided on the coil carrier (22, 16, 18) or on a part connected to the coil carrier (22, 16, 18).

14. Arrangement according to at least one of the preceding claims,
**characterised by** the following features:
a) on its side facing the coil carrier (22, 16, 18), the cover part (2, 8) has tongue-like mouldings (23 and 33) extending towards the coil carrier (22, 16, 18) and running substantially parallel to the longitudinal axis of the can-like housing part (1, 3, 19);
b) each of the mouldings (23, 33) has at least one projection (24, 34 respectively) running transversely to its longitudinal axis and extending towards the coil carrier (22, 16, 18);
c) on the coil carrier (22, 16, 18) there are provided raised areas (25, 32 respectively) and/or depressions running substantially transverse to the longitudinal direction of the coil carrier (22, 16, 18), which co-operate in the manner of a snap-fit connection with the projections (24, 33 respectively) of the tongue-like mouldings (23, 33 respectively) of the cover part (2, 8).

## Revendications

1. Dispositif pour positionner un porte-bobine (22, 16, 18) dans une partie de boîtier en forme de pot (1, 3, 19), en particulier pour le porte-bobine (22, 16, 18) d'un transmetteur de vitesse à impulsions, qui comprend une partie de fermeture (2, 8) agencée dans ou sur la partie de boîtier en forme de pot (1, 3, 19) sur le côté du porte-bobine (22, 16, 18) détourné du fond (19) de partie de boîtier en forme de pot (1, 13, 18), **caractérisé en ce qu'**au moins un élément élastique (12, 29) est agencé à la périphérie du porte-bobine (22, 16, 18), qui s'étend perpendiculairement à l'axe longitudinal du porte-bobine (22, 16, 18) en éloignement du porte-bobine (22, 16, 18) en direction de la paroi de la partie de boîtier en forme de pot (1, 3, 19), l'élément élastique (12, 29) étant réalisé et dimensionné de manière à s'appuyer sous précontrainte contre la paroi de la partie de boîtier en forme de pot (1, 3, 19) et à fixer élastiquement le porte-bobine (22, 16, 18) dans la partie de boîtier en forme de pot (1, 3, 19).

2. Dispositif selon la revendication 1, **caractérisé en ce qu'**il est prévu sur le porte-bobine (22, 16, 18), en supplément à l'élément élastique (12, 29), au moins un corps d'appui (27, 26, 35, 36) qui s'étend perpendiculairement à l'axe longitudinal du porte-bobine (22, 16, 18) en éloignement de celui-ci en direction de la paroi de la partie de boîtier en forme de pot, et qui est réalisé et dimensionné de telle sorte que le porte-bobine (22, 16, 18) s'appuie via le corps d'appui (27, 26, 35, 36) contre la paroi de la partie de boîtier en forme de pot (1, 3, 19), le corps d'appui (27, 26, 35, 36) et l'élément élastique (12, 29) étant agencés sur le porte-bobine (22, 16, 18) l'un par rapport à l'autre de telle sorte que le porte-bobine (22, 16, 18) est chargé par l'élément élastique (12, 29) en direction du corps d'appui (27, 26, 35, 36).

3. Dispositif selon l'une au moins des revendications précédentes, **caractérisé en ce que** l'élément élastique (12, 29) est réalisé d'un seul tenant avec le porte-bobine (22, 16, 18).

4. Dispositif selon l'une au moins des revendications précédentes, **caractérisé en ce que** le corps d'appui (27, 26, 35, 36) est réalisé d'un seul tenant avec le porte-bobine (22, 16, 18).

5. Dispositif selon l'une au moins des revendications précédentes, **caractérisé en ce que** l'élément élastique (12, 29) est réalisé sous forme de disque annulaire entourant le porte-bobine (22, 16, 18).

6. Dispositif selon la revendication 5, **caractérisé en ce que** le disque annulaire présente un contour de soutien et à effet élastique.

7. Dispositif selon l'une au moins des revendications précédentes, **caractérisé en ce qu'**il est prévu, entre les côtés tournés l'un vers l'autre de la partie de fermeture (2, 8) et du porte-bobine (22, 16, 18), au moins un autre élément élastique (9) au moyen duquel le porte-bobine (22, 16, 18) est maintenu en appui par son côté détourné de la partie de fermeture (2, 8) contre le fond (19) de la partie de boîtier en forme de pot (1, 3, 19) ou contre une pièce reliée au fond (19) de la partie de boîtier en forme de pot (1, 3, 19) et fixé élastiquement en direction de son axe longitudinal dans le boîtier (1, 3, 19, 2, 8).

8. Dispositif selon la revendication 7, **caractérisé en ce que** l'autre élément élastique (9) est réalisé d'un seul tenant avec le porte-bobine (22, 16, 18).

9. Dispositif selon la revendication 7, **caractérisé en ce que** l'autre élément élastique (9) est réalisé d'un seul tenant avec la partie de fermeture (2, 8).

10. Dispositif selon l'une au moins des revendications précédentes, **caractérisé en ce que** l'autre élément élastique (9) est formé par une saillie du porte-bobine (22, 16, 18) ou par une saillie de la partie de fermeture (2, 8), la saillie s'étendant en direction de la partie de fermeture (2, 8) ou en direction du porte-bobine (22, 16, 18) et présentant une traversée ou un évidement.

11. Dispositif selon la revendication 10, **caractérisé en ce qu'**il est prévu sur le porte-bobine (22, 16, 18) ou sur la partie de fermeture (2, 8) plusieurs saillies servant d'autres éléments élastiques.

12. Dispositif selon la revendication 1, **caractérisé en ce qu'**il est prévu sur la partie de fermeture (2, 8) et/ou sur le porte-bobine (22, 16, 18) des moyens pour la liaison en coopération de forces et/ou de formes de la partie de fermeture (2, 8) avec le porte-bobine (22, 16, 18).

13. Dispositif selon la revendication 12, **caractérisé en ce que** les moyens sont formés par au moins une bosse (24, 34) et/ou par un creux sur la partie de fermeture (2, 8) ou sur une pièce reliée à la partie de fermeture (2, 8) et par au moins un creux et/ou une bosse (25, 32) prévu(e) sur le porte-bobine (22, 16, 18) ou sur une pièce reliée au porte-bobine (22, 16, 18), qui coopèrent à la manière d'une liaison à encliquetage.

14. Dispositif selon l'une au moins des revendications précédentes, **caractérisé par** les éléments suivants :
a) la partie de fermeture (2, 8) comprend sur son côté tourné vers le porte-bobine (22, 16, 18) des conformations (23 et 33) qui s'étendent vers le porte-bobine (22, 16, 18) et sensiblement parallèlement à l'axe longitudinal de la partie boîtier en forme de pot (1, 3, 19) et qui sont en forme de languettes ;
b) chacune des conformations (23 ou 33) comprend au moins une saillie (24 ou 34) qui s'étend perpendiculairement à son axe longitudinal et en direction du porte-bobine (22, 16, 18);
c) il est prévu sur le porte-bobine (22, 16, 18) des bosses (25 ou 32) et/ou des creux s'étendant sensiblement perpendiculairement à l'axe longitudinal du porte-bobine (22, 16, 18), qui coopèrent avec les saillies (24 ou 34) des conformations en forme de languettes (23 ou 33) de la partie de fermeture (2, 8) à la manière d'une liaison à encliquetage.
